Europäisches Patentamt

European Patent Office

Office européen des brevets

(19)

(11) Veröffentlichungsnummer: **0 053 575**
**B1**

(12)

# EUROPÄISCHE PATENTSCHRIFT

(45) Veröffentlichungstag der Patentschrift:
08.08.84

(21) Anmeldenummer: 81730115.3

(22) Anmeldetag: 30.10.81

(51) Int. Cl.³: **G 01 F 3/10**

(54) Volumenstromsensor nach Art eines Zahnradmotors.

(30) Priorität: 27.11.80 DE 3045043

(43) Veröffentlichungstag der Anmeldung:
09.06.82 Patentblatt 82/23

(45) Bekanntmachung des Hinweises auf die Patenterteilung:
08.08.84 Patentblatt 84/32

(84) Benannte Vertragsstaaten:
FR GB IT NL SE

(56) Entgegenhaltungen:
DE - A - 2 157 127
DE - B - 2 554 466
FR - A - 1 409 036

(73) Patentinhaber: KRACHT Pumpen- und Motorenfabrik
GmbH & Co. KG, Gewerbestrasse 20, D-5980 Werdohl
(DE)

(72) Erfinder: Weber, Werner, Ing. grad., Feldstrasse 102,
D-5980 Werdohl (DE)

(74) Vertreter: Gralfs, Harro, Dipl.-Ing., Am Bürgerpark 8,
D-3300 Braunschweig (DE)

## Beschreibung

Die Erfindung bezieht sich auf einen Volumenstromsensor nach Art eines Zahnradmotors mit einem Paar runder Zahnräder, die in einem Gehäuse auf feststehenden Achsen über Kugellager ohne Wandberührung frei drehbar gelagert sind und bei dem in einem Gehäusedeckel im Bereich der Zähne eines der Zahnräder wenigstens ein amagnetischer Einsatz vorgesehen ist, der mit zwei den Einsatz durchdringenden Polen aus einem magnetisch leitenden Material versehen ist, deren innere Enden im wesentlichen auf dem gleichen Zahnraddurchmesser liegen und über deren äußeren Enden ein Feldplattendifferentialfühler mit seinen Feldplatten angeordnet ist.

Von dem Feldplattendifferentialfühler werden beim Vorbeilaufen eines Zahnes jeweils Signale in Form eines Sinussignales mit einer positiven und einer negativen Periode abgegeben, aus denen jeweils Impulssignale abgeleitet werden, die dann in einem Impulszähler registriert werden. Jeder Impuls entspricht dabei einer Flüssigkeitsmenge von der Größe des geometrischen Zahnvolumens.

Serienmäßige Feldplattendifferentialfühler haben zwei Feldplatten mit einer Plattenfläche von jeweils 1 · 2 mm. Diese Feldplatten liegen mit ihren langen Seiten parallel zueinander in einem Abstand von 0,7 mm.

Die als Polstifte ausgebildeten Pole im amagnetischen Einsatz liegen parallel zueinander. Die Polstifte sind abgesetzt, um auch hohen Innendrücken bis 400 bar Rechnung zu tragen. Sie haben an ihrem inneren Ende dabei einen Durchmesser von 2,2 mm und an ihrem oberen Ende einen Durchmesser von 1,9 mm bei einem Mittenabstand von 2,2 mm.

Volumenstromsensoren der bekannten Art ergeben sich zu einer Zahngröße von etwa Modul 3 brauchbare Sinussignale. Bei Volumenstromsensoren mit Zahnrädern mit größerem Modul kommt es zu starken Verzerrungen der Sinuskurve mit unter einem spitzen Winkel zur Nullinie verlaufenden Kurvenabschnitten im Bereich des Nulldurchganges. Aus solchen verzerrten Sinuskurven lassen sich keine sauberen Impulse ableiten. Darüber hinaus kommt es gleichzeitig zu einer starken Abweichung vom gewünschten Taktverhältnis 1 : 1.

Aufgabe der Erfindung ist es, einen Volumenstromsensor der gattungsgemäßen Art so auszugestalten, daß auch bei Zahnrädern mit einem Modul > 3 beim Vorbeigang eines Zahnes an dem Differentialfeldplattenfühler ein brauchbares Sinussignal abgegeben wird.

Diese Aufgabe wird gemäß der Erfindung dadurch gelöst, daß die Pole von ihren die Außenfläche des Einsatzes durchdringenden Enden ausgehend in gegeneinander versetzten Ebenen so im Einsatz angeordnet sind, daß die die Innenfläche des Einsatzes durchdringenden inneren Enden der Pole in einem größeren Abstand voneinander liegen als die äußeren Enden.

Zweckmäßige Ausführungsformen und Ausgestaltungen der Erfindung sind in den Unteransprüchen herausgestellt.

Mit der erfindungsgemäßen Lösung wird die Basisbreite für den Feldplattendifferentialfühler, der vorgegeben ist durch den Abstand der inneren Enden der Pole, wesentlich über den Abstand vergrößert, der bei der bekannten Anordnung der Pole vorgegeben war. Dadurch lassen sich genaue Anpassungen an die Zahnbreite vornehmen. Der Mittenabstand der inneren Polenden sollte etwa der Breite des Zahnes auf dem Abtastdurchmesser entsprechen. Durch die erfindungsgemäße Anordnung der Pole kann darüber hinaus der Abstand der äußeren Enden der Pole so weit verringert werden, daß er dem Abstand der Feldplatten entspricht. Damit kommt es zu einer wesentlich verbesserten Überdekkung der Feldplatten mit den äußeren Polenden und zu einer Steigerung der Empfindlichkeit.

Fig. 1 zeigt einen Schnitt längs der Linie I-I in Fig. 2 durch einen Volumenstromsensor gemäß der Erfindung.

Fig. 2 zeigt einen Schnitt längs der Linie II-II in Fig. 1.

Fig. 3 zeigt einen Schnitt längs der Linie III-III in Fig. 4.

Fig. 4 zeigt einen Schnitt längs der Linie IV-IV in Fig. 3.

Fig. 5 zeigt in einem Schnitt längs der Linie III-III in Fig. 4 eine weitere Ausführungsform.

Fig. 6 zeigt einen Schnitt längs der Linie VI-VI in Fig. 7.

Fig. 7 zeigt eine Draufsicht auf einen amagnetischen Einsatz in zwei weiteren Ausführungsformen.

Der in der Zeichnung dargestellte Volumenstromsensor ist nach Art eines Zahnradmotors aufgebaut und weist ein Paar miteinander kämmender Zahnräder 2 auf, die auf feststehenden Achsen 4 über Kugellager 6 in der sie aufnehmenden Kammer 8 ohne Wandberührung frei drehbar gelagert sind. Die Kammer 8 ist bei dem Ausführungsbeispiel in einem unteren Gehäuseteil 10 ausgebildet. Sie wird verschlossen durch einen Deckel 12. Zwischen den beiden Gehäuseteilen ist eine Dichtung 14 angeordnet. Im Gehäuse 10 sind im Abstand voneinander als Zu- bzw. Ablauf Bohrungen 16 und 18 angeordnet, über die die Flüssigkeit im wesentlichen parallel zu den Drehachsen der Zahnräder stirnseitig ein- und austritt.

Im Deckel 12 ist in einer Senkbohrung 20 ein Feldplattendifferentialfühler 22 bekannter Bauart angeordnet, der an seinem unteren Ende 24 seine beiden Feldplatten trägt. In den Gehäusedeckel ist von der die Kammer 8 begrenzenden Innenseite 26 ausgehend ein Einsatz 28 aus einem amagnetischen Material eingesetzt, der in Form eines runden Plättchens aus Aluminium oder einem anderen amagnetischen Material bestehen kann. Dieses Plättchen liegt koaxial mit der Bohrung 20.

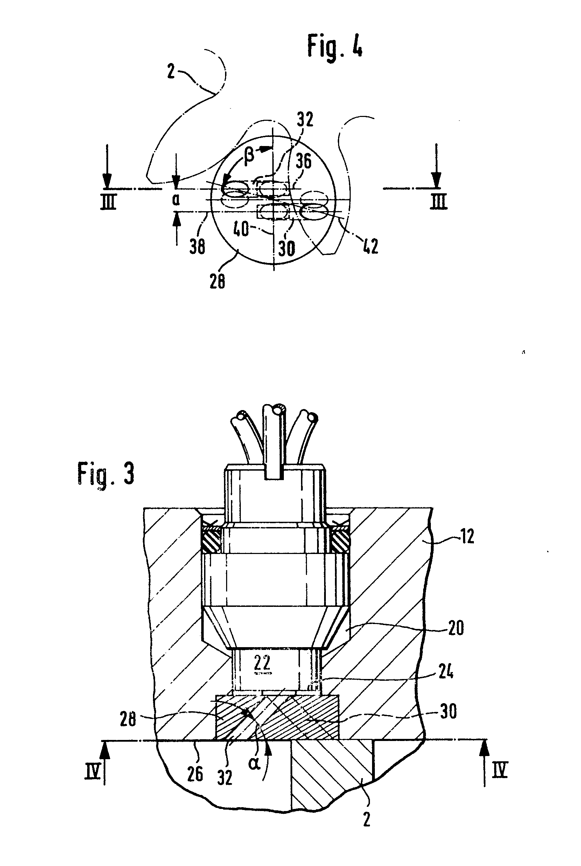

In dem Einsatz 28 sind, wie aus den Fig. 3 und 4 ersichtlich, im Abstand voneinander zwei Polstifte 30, 32 unter einem Winkel $\alpha$ gegen die gemeinsame Achse von Einsatz 28 und Feldplattendifferentialfühler 22 geneigt angeordnet. Der Neigungswinkel $\alpha$ kann beispielsweise 45° betragen. Die Polstifte 30 und 32 sind in zwei in einem Abstand a voneinander liegenden Ebenen 36, 38 angeordnet. Diese Ebenen liegen hier im wesentlichen parallel zueinander. Die Polstifte durchdringen bei einer solchen Anordnung die Innen- und Außenseite des Einsatzes 28 mit elliptischen Querschnitten, wobei am oberen, den Feldplatten gegenüberliegenden Ende, die Ellipsen mit ihren langen Achsen parallel zueinander liegen, wobei die Mittelpunkte der Ellipsen auf einer Linie 40 liegen, die im wesentlichen senkrecht zu den Ebenen 36 und 38 verläuft bzw. die kurzen Achsen der Ellipsen miteinander fluchten. Die Polstifte 30 und 32 können in bekannter Weise abgesetzt sein, um den Innendruck des Volumenstromsensors auf den Einsatz 28 zu übertragen. Ein solcher abgesetzter Abschnitt ist in der Zeichnung nicht dargestellt.

Bei der beschriebenen Anordnung hängt der erreichbare Mindestabstand a der Polstifte nicht mehr vom größten Durchmesser der Polstifte ab. Damit kann der Mittenabstand a der Polstifte an den inneren den Feldplatten gegenüberliegenden Enden, dem Mittenabstand der Feldplatten des Feldplattendifferentialfühlers weitgehend angepaßt werden. Bei einem Polstiftdurchmesser in diesem Bereich von 1,5 bis 1,6 mm läßt sich ein Mittenabstand entsprechend dem Mittenabstand handelüblicher Feldplattendifferentialfühler von 1,7 mm exakt anpassen. Die Durchdringungsellipse der Polstifte 30 und 32 am oberen Ende des Einsatzes 28 überdeckt dabei weitgehend die Feldplattenfläche, so daß der magnetische Fluß mit hohem Wirkungsgrad aus dem Fühler in die Polstifte übertreten kann.

Bei der bisher beschriebenen Anordnung der Polstifte liegt die Verbindungslinie 40 zwischen den Mitten der Polstifte an deren oberem Ende gegen die Verbindungslinie 42 durch die Mitten der Polstifte an den unteren Polenden unter einem Winkel $\beta$ versetzt. Der Einsatz 28 ist daher so in den Gehäusedeckel 12 einzusetzen, daß die beiden Polstifte im wesentlichen auf dem gleichen Durchmesser des Zahnrades 2 im Bereich seiner Zähne liegen, vorzugsweise auf dem Teilkreis der Zahnräder. Hierbei tritt eine gewisse Asymmetrie auf, die noch zu einer geringfügigen Verzerrung der angegebenen Sinussignale führen kann. Vollkommen symmetrische Verhältnisse sind erreichbar, wenn die Ebenen, in denen die Polstifte liegen, gegenüber deren paralleler Lage so gegeneinandergeneigt angeordnet werden, daß an den unteren Polstiftenden die langen Achsen der Ellipsen miteinander fluchten, wie in Fig. 4 gestrichelt dargestellt. Bei einem runden Einsatz liegen die Ellipsen an den unteren Polstiftenden dann mit ihren langen Achsen auf einem Durchmesser und die Ellipsen der oberen Polstiftenden mit ihren kurzen Achsen auf einem unter einem Winkel von 90° dagegen verdrehten Durchmesser. Der Winkel beträgt dann 90°.

Mit einer Polstiftanordnung in der beschriebenen Art werden auch bei breiten Zähnen, beispielsweise Verzahnungen Modul 7, von dem Feldplattendifferentialfühler gute Sinussignal abgegeben, die eine sichere Impulsbildung ermöglichen. Bei einer Neigung der Polstifte unter einem Winkel $\alpha = 45°$ läßt sich bei einer Dicke des Einsatzes von 6 mm eine Spreizung der Polstiftbasis, d. h. ein Mittenabstand der inneren Polstiftenden von 10,5 mm erreichen, ein Abstand, der größer ist als die mittlere Zahnbreite einer Verzahnung Modul 7, die 9,63 mm beträgt. Durch Wahl des Neigungswinkels $\alpha$ läßt sich eine exakte Anpassung der Polstiftbasis an die jeweilige Zahnbreite erreichen.

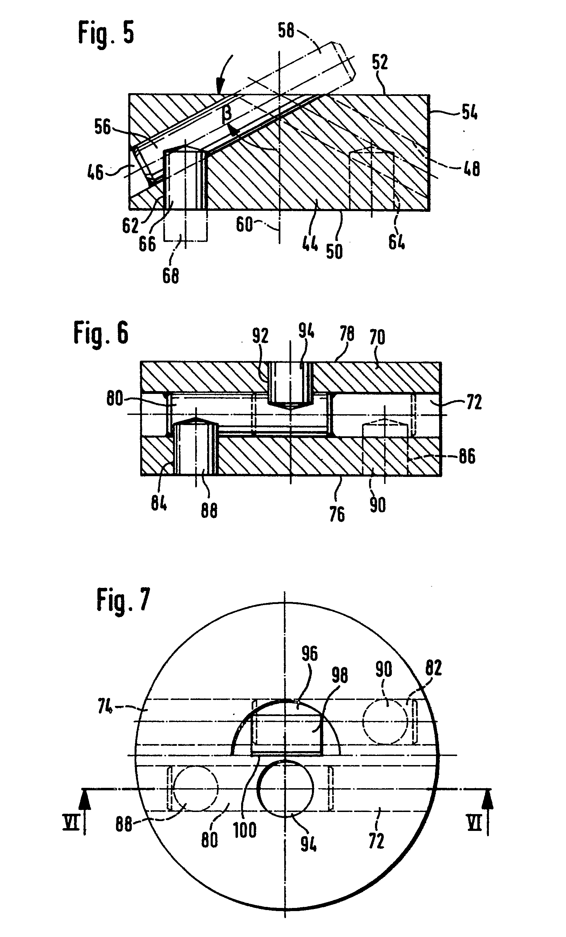

Bei der Ausführungsform nach Fig. 5 sind in dem Einsatz 44 zwei entgegengesetzt geneigte Bohrungen 46, 48 angeordnet, die unter einem solchen Winkel $\beta$ zu der parallel zur Innenfläche 50 liegenden Außenfläche 52 angeordnet sind, daß sie den Rand 54 des Einsatzes durchdringen. In diesen schrägen Bohrungen sind jeweils Polstifte 56 angeordnet, die in den Bohrungen verklebt sein können. Die Polstifte können, wie dargestellt, als zylindrische Stifte eingesetzt werden, wobei die radial außen liegenden Enden radial einwärts von der Durchdringungsfläche der Schrägbohrung liegen. Das die Außenfläche 52 durchdringende Ende 58 der Polstifte wird abgearbeitet, so daß in der Außenfläche eine Durchdringungsellipse gebildet ist, wie bei der Ausführungsform nach Fig. 3 und 4.

Von der Innenfläche 50 des Einsatzes 44 ausgehend sind symmetrisch zur Mittellinie 60 des Einsatzes Bohrungen 62, 64 vorgesehen, die in die geneigten Polstifte 56 eindringen bzw. diese ausschneiden. In diese Bohrungen sind zylindrische Polstifte 66 eingesetzt und durch Verkleben festgelegt. Die überstehenden Enden 68 der Polstifte 66 werden bis auf die Innenfläche 50 des Einsatzes abgearbeitet. Dies kann beispielsweise nach dem Einfügen des Einsatzes in den Gehäusedeckel 12 bei der Bearbeitung von dessen Innenseite 26 erfolgen. Die Polstifte können selbstverständlich auch mit Preßsitz in den Bohrungen festgelegt werden.

Im Gegensatz zu der Ausführungsform nach den Fig. 3 und 4, bei der die Polstifte auch auf der Innenseite des Einsatzes eine Durchdringungsellipse bilden, ist bei der Ausführungsform nach Fig. 5 die Innenseite der Polstifte 66 kreisförmig. Für die Fertigung entsteht der Vorteil, daß die geneigten Polstifte 56 immer unter dem gleichen Winkel angeordnet sein können, während der Abstand der inneren Polstifte 66 den jeweiligen Bedürfnissen des Signalabgriffes entsprechend gewählt wird. Da die geneigt angeordneten äußeren Polstifte 56 nicht mehr in Achsrichtung des Volumenstromsensors beaufschlagt werden, können sie auch bei hohen Innendrücken des Sensors ohne Absatz ausgeführt werden. Die durch den Innendruck beaufschlagten inneren Polstifte 66 sind im Boden der Sackbohrung abgestützt und auf diese Weise gegen Verschieben gesichert.

Es ist weiter eine Ausführungsform möglich, wie sie in den Fig. 6 und 7 dargestellt ist. Bei dieser Ausführung ist der Einsatz 70 mit zwei parallelen Bohrungen 72, 74 versehen, die ihrerseits wieder im wesentlichen parallel zu der inneren Oberfläche 76 bzw. äußeren Oberfläche 78 des Einsatzes verlaufen. Die Bohrungen 72 und 74 können als Sackbohrungen ausgebildet sein. Vorzugsweise erstrecken sie sich jedoch, wie in der Zeichnung dargestellt, durch den ganzen Einsatz hindurch. Bei dem dargestellten Ausführungsbeispiel sind in die Bohrungen 72 bzw. 74 von entgegengesetzten Enden jeweils Polstifte 80, 82 eingesteckt, die durch eine Verklebung in der Bohrung festgelegt sind. Von der inneren Oberfläche 76 ausgehend sind wie bei der Ausführungsform nach Fig. 5 Sackbohrungen 84, 86 vorgesehen, die in die Polstifte 80 bzw. 82 eindringen. In diesen Bohrungen sind wiederum zylindrische Polstifte 88, 90 abdichtend befestigt.

Bei der Ausführungsform nach Fig. 6 und 7 untere Hälfte sind in der Mitte des Einsatzes auf einer Linie quer zu den Achsen der Polstifte 80, 82 Bohrungen 92 vorgesehen, die wiederum in die Polstifte 80, 82 eindringen. In diese Bohrungen sind zylindrische Polstifte 94 eingesetzt und darin abdichtend befestigt.

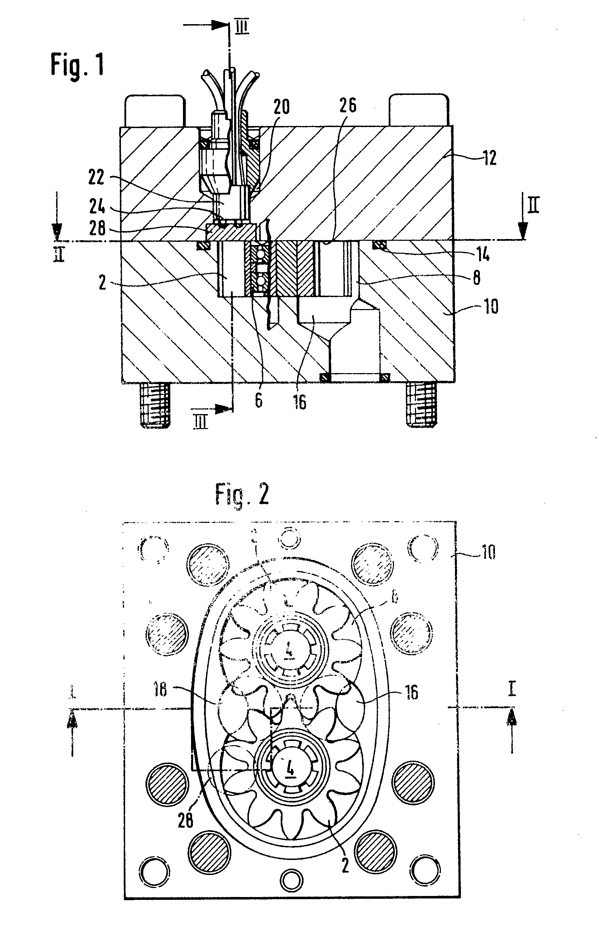

Bei der im vorstehenden unter Bezug auf Fig. 6 und 7 beschriebenen Ausführungsform entfällt die Durchdringungsellipse und in der äußeren Oberfläche, die bei den Ausführungsformen nach den Fig. 1 bis 5 zu einer vorteilhaften Überdeckung der Feldplättchen der Feldplattendifferentialfühler führt. Bei der Ausführungsform nach den Fig. 6 und 7 kann jedoch eine vergleichbare Wirkung dadurch erzielt werden, daß für die Polstifte 94 ein entsprechend größerer Durchmesser gewählt wird, wie in Fig. 7 unten angedeutet. Ein solcher größerer Durchmesser ist ohne weiteres möglich, da der Polstift 94 keinem Druck ausgesetzt ist.

Da der Bereich, in dem die äußeren Polstifte 94 liegen, drucklos ist, ist auch eine andere Ausführungsform möglich, mit der eine Überdeckung der Feldplättchen möglich ist, die der durch die oben beschriebene Durchdringungsellipse ebenbürtig ist. Eine solche Ausführungsform ist in Fig. 7 oben dargestellt. Hier ist von der äußeren Oberfläche 78 ausgehend eine zentrale Senkbohrung 96 angeordnet, die die horizontalen Polstifte 80 und 82 mit einer ebenen Bodenfläche anschneidet. In diese Bohrung können dann beispielsweise im Querschnitt rechteckige Polstifte 98 eingesetzt werden, die dann anschließend in der Sackbohrung verklebt werden können. Die beiden Polstifte 98 können dabei mit einer amagnetischen Mittelschicht 100 verklebt sein, so daß beide Polstifte als ein Bauelement eingesetzt werden können. Die amagnetische Zwischenschicht 100 kann dabei in ihrer Dicke genau entsprechend dem Abstand der Feldplättchen gewählt werden und der Rechteckquerschnitt der Polstifte 98 entsprechend dem Querschnitt der Feldplättchen. Der Durchmesser der Senkbohrung 96 wird dabei vorzugsweise so gewählt, daß er den umschreibenden Kreis für das Polstiftelement mit amagnetischer Zwischenschicht bildet, so daß das Polstiftelement in der Senkbohrung zentriert ist. Die Abmessungen können auch so gewählt werden, daß gleichzeitig eine Klemmwirkung auftritt, wobei die Klemmung auch so dimensioniert sein kann, daß eine zusätzliche Verklebung entfallen kann.

**Patentansprüche**

1. Volumenstromsensor nach Art eines Zahnradmotors mit einem Paar runder Zahnräder (2), die in einem Gehäuse (10, 12) auf feststehenden Achsen (4) über Kugellager (6) ohne Wandberührung frei drehbar gelagert sind und bei dem in einem Gehäusedeckel (12) im Bereich der Zähne eines der Zahnräder (2) wenigstens ein amagnetischer Einsatz (28) vorgesehen ist, der mit zwei den Einsatz (28) durchdringenden Polen (30, 32) aus einem magnetisch leitenden Material versehen ist, deren innere Enden im wesentlichen auf dem gleichen Zahnraddurchmesser liegen und über deren äußeren Enden ein Feldplattendifferentialfühler (22) mit seinen Feldplatten angeordnet ist, dadurch gekennzeichnet, daß die Pole (30, 32) von ihren die Außenfläche des Einsatzes (28) durchdringenden Enden ausgehend in gegeneinander versetzten Ebenen (36, 38) so im Einsatz (28) angeordnet sind, daß die die Innenfläche (26) des Einsatzes (28) durchdringender inneren Enden der Pole (30, 32) in einem größeren Abstand voneinander liegen als die äußeren Enden.

2. Volumenstromsensor nach Anspruch 1, bei dem die Pole als Polstifte mit rundem Querschnitt ausgebildet sind, dadurch gekennzeichnet, daß die Polstifte (30, 32) sowohl die Innenfläche (26) als auch die Außenfläche des Einsatzes (28) durchdringen und die Durchdringungsellipsen der äußeren Enden der Polstifte (30, 32) mit ihren langen Achsen im wesentlichen parallel zueinander liegen und mit ihren kurzen Achsen im wesentlichen miteinander fluchten.

3. Volumenstromsensor nach Anspruch 2, dadurch gekennzeichnet, daß die inneren Enden der Polstifte (30, 32) so angeordnet sind, daß die langen Achsen der Durchdringungsellipsen im wesentlichen miteinander fluchten.

4. Volumenstromsensor nach Anspruch 1, dadurch gekennzeichnet, daß die Pole aus einer Mehrzahl von Polelementen bestehen.

5. Volumenstromsensor nach Anspruch 4, dadurch gekennzeichnet, daß die Pole als erste Polelemente Polstifte (56) aufweisen, die in Bohrungen (46, 48) angeordnet sind, die mit einem Ende vom Rand (54) des amagnetischen Einsatzes (44) ausgehen und mit dem anderen Ende die Außenfläche (52) des Einsatzes (44) so durchdringen, daß die Durchdringungsellipsen mit ihren langen Achsen im wesentlichen parallel zueinander liegen und mit ihren kurzen Achsen im wesentlichen miteinander fluchten, und daß im Einsatz (44) von dessen Innenfläche (50) ausgehend im wesentlichen senkrecht zur Innenfläche (50) stehende gleichfalls als Polstifte (66) ausgebildete zweite Polelemente vorgesehen sind, die in symmetrischen Bohrungen (62, 64) angeordnet sind, welche in die ersten Polelemente (56) eindringen, mit denen die zweiten Polelemente (66) in magnetisch leitender Verbindung stehen.

6. Volumenstromsensor nach Anspruch 4, dadurch gekennzeichnet, daß die Pole als erste Polelemente Polstifte (80, 82) aufweisen, die sich von Rand des Einsatzes (70) quer in den Einsatz (70) erstrecken bzw. diesen quer durchdringen, daß im Einsatz (70) von dessen Innenfläche (76) ausgehend im wesentlichen senkrecht zur Innenfläche (76) stehende gleichfalls als Polstifte (88, 90) ausgebildete zweite Polelemente vorgesehen sind, die in symmetrischen Bohrungen (84, 86) angeordnet sind, welche in die ersten Polelemente (80, 82) eindringen, mit denen die zweiten Polelemente (88, 90) in magnetisch leitender Verbindung stehen, und daß sich von der Außenfläche (78) des Einsatzes (70) aus im wesentlichen senkrecht zur Außenfläche (78) erstreckende dritte Polelemente (94) vorgesehen sind, die mit den ersten Polelementen (80, 82) in magnetisch leitender Verbindung stehen.

7. Volumenstromsensor nach Anspruch 6, dadurch gekennzeichnet, daß die dritten Polelemente als Polstifte (94) ausgebildet sind, die in Bohrungen (92) angeordnet sind, welche in die ersten Polelemente (80, 82) eindringen.

8. Volumenstromsensor nach Anspruch 6, dadurch gekennzeichnet, daß eine vom mittleren Bereich der Außenfläche (78) des Einsatzes (70) ausgehende Senkbohrung (96) vorgesehen ist, von der beide erste Polelemente (80, 82) angeschnitten sind, und daß die dritten Polelemente (98) einen im wesentlichen rechteckigen Querschnitt haben und über eine amagnetische Zwischenschicht (100) aneinander liegend in der Senkbohrung (96) so angeordnet sind, daß sie mit den ersten Polelementen (80, 82) in magnetisch leitender Verbindung stehen.

**Claims**

1. A volume flow sensor of the gear wheel motor type having a pair of circular gear wheels (2) which are mounted in a housing (10, 12) therefor to rotate freely in fixed axes (4) by means of ball bearings (6) without contact with walls of said housing and at least one non-magnetic inset (28) in a cover (12) in the region of the teeth of ore of said gear wheels (2), said inset having two poles (30, 32) of magnetic conductivity extending through said inset (28), the inner ends of the poles being situated substantially on the same diameter of said gear wheel and over the outer ends of said poles being provided a field plate differential sensor (22) with its field plates, characterised in that the poles (30, 32) from their ends penetrating the outer surface of the inset (28) are arranged in planes (36, 38) situated at a distance from one another in such a way that the inner ends of the poles (30, 32) penetrating the inner surface (26) of the inset (28) are situated at a greater distance to each other than the outer ends.

2. A volume flow sensor according to claim 1, where the poles are formed as pole pins with round cross-section, characterized in that the pole pins (30, 32) penetrate both the inner surface (26) as well as the outer surface of the inset (28) and the long axes of the penetration ellipses of the outer ends of the pole pins (30, 32) are substantially parallel to one another and the short axes are in substantial alignment one with the other.

3. A volume flow sensor according to claim 2, characterized in that the inner ends of the pole pins (30, 32) are arranged in such a way that the long axes of the penetration ellipses are in substantial alignment with the other.

4. A volume flow sensor according to claim 1, characterised in that the poles comprise a plurality of pole elements.

5. A volume flow sensor according to claim 4, characterised in that the poles as first pole elements comprise pole pins (56) which are arranged in bores (46, 48) which with one end extend from the edge (54) of the non-magnetic inset (44) and with the other end penetrate the outer surfaces (52) of the inset (44) in such a way that the longer axes of the penetration ellipses are substantially parallel to one another and the short axes are in substantial alignment, and second pole elements are provided being also in the form of pole pins (66) situated in the inset (44) extending from its inner surface (50) substantially vertical to said inner surface (50) and said second pole elements being situated in symmetrical bores (62, 64), which extend into the first pole elements (56), with which the second pole elements (66) are in magnetically-conductive connection.

6. A volume flow sensor according to claim 4, characterised in that the poles as first pole elements comprise pole pins (80, 82), which extend from the edge of the inset (70) transversely into the inset (70) and transversely extend through said inset respectively, that second pole elements are provided being also in the form of pole pins (88, 90) situated in the inset (70) extending from its inner surface (76) substantially vertical to said inner surface (76), and said second pole elements being situated in symmetrical bores (84, 86), which extend into the first pole elements (80, 82), with which the second pole elements (88, 90) are in magnetically-corductive connection, and that third pole elements (94) are provided extending from the outer surface (78) of the inset (70) substantially vertical to said outer surface (78), and said third pole elements being in magnetically-conductive connection with the first pole elements (80, 82).

7. A volume flow sensor according to claim 6, characterised in that the third pole elements are in the form of pole pins (94 arranged in bores (92) extending into said first pole elements (80, 82).

8. A volume flow sensor according to claim 6, characterised in that a sunk bore (96) is provided extending from the central region of the outer surface (78) of the inset (70), by which both pole elements (80, 82) are cut, and that the third pole elements (98) have a substantially rectangular cross-section and are positioned adjacent each other side-by-side, but separated one from the other by a non-magnetic intermediate layer (100) in said sunk bore (96) and each making magnetically-conducting connection with the first pole elements (80, 82).

## Revendications

1. Capteur de débit volumétrique du genre moteur à engrenage avec une paire de roues dentées (2) rondes qui sont montées dans un carter (10, 12) sur des axes fixes (4), tournant librement par l'intermédiaire de roulements à billes (6) sans contact avec les parois, et dans lequel il est prévu dans la zone des dents de l'une des roues dentées (2) au moins une pièce d'insertion (28) amagnétique qui est munie de deux pôles (30, 32) en matériau magnétiquement conducteur, dont les extrémités intérieures sont situées sensiblement sur le même diamètre de roue dentée et par dessus les extrémités extérieures desquels est disposé par ses plaques de champ un détecteur différential à plaques de champ (22), caractérisé en ce que, en partant de leurs extrémités traversant la surface extérieure de la pièce d'insertion (28), les pôles (30, 32) sont disposés à l'intérieur de la pièce d'insertion (28) dans des plans (36, 38) décalés l'un par rapport à l'autre de telle façon que les extrémités des pôles (30, 32) traversant la surface intérieure (26) de la pièce d'insertion (28) sont séparées l'une de l'autre par une distance plus grande que les extrémités extérieures.

2. Capteur de débit volumétrique selon la revendication 1, dans lequel les pôles sont des tiges polaires à section ronde, caractérisé en ce que les tiges polaires (30, 32) traversent aussi bien la surface intérieure (26) que la surface extérieure de la pièce d'insertion (28) et que les ellipses d'intersection des extrémités extérieures des tiges polaires (30, 32) sont sensiblement parallèles entre elles par leurs grands axes et sont sensiblement dans le prolongement l'une de l'autre par leurs petits axes.

3. Capteur de débit volumétrique selon la revendication 2, caractérisé en ce que les extrémités intérieures des tiges polaires (30, 32) sont disposées de façon telle que les grands axes des ellipses d'intersection sont sensiblement dans le prolongement l'un de l'autre.

4. Capteur de débit volumétrique selon la revendication 1, caractérisé en ce que les pôles sont sonstitués par une pluralité d'éléments polaires.

5. Capteur de débit volumétrique selon la revendication 4, caractérisé en ce que les pôles comportent comme premiers éléments polaires des tiges polaires (56) qui sont disposées dans des alésages (46, 48) qui, par une extrémité, partent du bord (54) de la pièce d'insertion (44) amagnétique et, par l'autre extrémité, traversent la surface extérieure (52) de la pièce d'insertion (44) de telle sorte que les ellipses d'intersection sont sensiblement parallèles entre elles par leurs grands axes et, par leurs petits axes, sont sensiblement dans le prolongement l'une de l'autre, et qu'il est prévu dans l'élément d'insertion (44) des deuxièmes éléments polaires qui sont également des tiges polaires (66) partant de la surface intérieure (50) de l'élément d'insertion et sensiblement perpendiculaires à la surface intérieure (50) qui sont disposés dans les alésages (63, 64) symétriques, lesquels pénètrent dans les premiers éléments polaires (56) avec lesquels les deuxièmes éléments polaires (66) sont en liaison magnétiquement conductrice.

6. Capteur de débit volumétrique selon la revendication 4, caractérisé en ce que les pôles comportent comme premiers éléments polaires des tiges polaires (80, 82) qui en partant du bord de la pièce d'insertion (70), s'étendent transversalement dans la pièce d'insertion (70) et/ou traversent celle-ci transversalement, qu'il est prévu dans la pièce d'insertion des deuxièmes éléments polaires affectant également la forme de tiges polaires (88, 90), partant de la surface intérieure (76) de la pièce d'insertion et dirigés sensiblement perpendiculairement à cette surface intérieure (76), qui sont disposés dans des alésages (84, 86) symétriques qui pénètrent dans les premiers éléments polaires (80, 82) avec lesquels les deuxièmes éléments polaires (88, 90) sont en liaison de conduction magnétique, et qu'il est prévu des troisièmes éléments polaires (94) partant de la surface extérieure (78) de la pièce d'insertion (70) et s'étendant sensiblement perpendiculairement à la surface extérieure (78) qui sont en liaison de conduction magnétique avec les premiers éléments polaires (80, 82).

7. Capteur de débit volumétrique selon la revendication 6, caractérisé en ce que les troisièmes éléments polaires se présentent sous la forme de tiges polaires (94) qui sont disposées dans des alésages (92) qui pénètrent dans les premiers éléments polaires (80, 82).

8. Capteur de débit volumétrique selon la revendication 6, caractérisé en ce qu'il est prévu un trou borgne (96) partant de la partie médiane de la surface extérieure (78) de la pièce d'insertion (70) par lequel sont entamés les deux premiers éléments polaires (80, 82) et que les troisièmes éléments polaires (98) ont une section transversale essentiellement rectangulaire, et sont disposés dans le trou borgne (96) appliqués l'un contre l'autre par l'intermédiaire d'une couche intermédiaire (100) amagnétique, de telle sorte qu'ils se trouvent en liaison de conduction magnétique avec les premiers éléments polaires (80, 82).

Fig. 1

Fig. 2

Fig. 4

Fig. 3

**Fig. 5**

**Fig. 6**

**Fig. 7**